# EUROPÄISCHE PATENTSCHRIFT

(11) **EP 1 266 558 B1**
(45) Veröffentlichungstag und Bekanntmachung des Hinweises auf die Patenterteilung: **06.12.2006**
(21) Anmeldenummer: 02005835.0
(22) Anmeldetag: 14.03.2002
(51) Int. Cl.: A01D 41/12, A01D 41/127

(54) **Mähdrescher mit einem Schrägfördererkraftsensor zur Messung des Gutdurchsatzes**
Elevator conveyor with force sensor for detecting the throughput of a combine
Convoyeur élévateur muni d'un capteur de force pour détecter le débit d' une moissonneuse-bateuse

(30) Priorität: 20.03.2001 US 813264
(43) Veröffentlichungstag der Anmeldung: 18.12.2002
(73) Patentinhaber: DEERE & COMPANY, Moline, Illinois 61265-8098 (US)
(72) Erfinder: Coers, Bruce, Alan, Hillsdale, IL 61257 (US); Burke, Daniel, James, Cordova, IL 61242 (US); Cooper, William, F., Fargo, ND 58102 (US); Littke, Jerry, Dean, Hillsboro, ND 58045 (US); Mertins, Karl-Heinz, Davenport, IA 52807 (US)
(74) Vertreter: Holst, Sönke

(56) Entgegenhaltungen:
- DE-A1- 4 311 054
- DE-B- 1 265 476
- DE-C1- 19 903 471
- US-A- 3 073 099

## Beschreibung

Die Erfindung betrifft einen Mähdrescher mit einem Schrägförderer, der eingerichtet ist, Erntegut in den Mähdrescher zu fördern, mit im Eingriff mit dem Erdboden befindlichen Mitteln, die eingerichtet sind, den Mähdrescher mit einer Erntegeschwindigkeit über den Erdboden zu bewegen und mit einer Steuerung, die eingerichtet ist, die Erntegeschwindigkeit in Abhängigkeit vom Signal eines Schrägfördererkraftsensors einzustellen, der eingerichtet ist, eine vom Erntegut auf den Schrägförderer ausgeübte Kraft zu erfassen und der Steuerung ein aktuelles Schrägfördererkraftsignal zuzuführen.

Landwirtschaftliche Mähdrescher sind große Maschinen, die landwirtschaftliches Gut ernten, dreschen, trennen und reinigen. Das gewonnene saubere Korn wird in einem am Mähdrescher angeordneten Korntank gespeichert. Das saubere Korn kann dann vom Korntank durch einen Entladeschneckenförderer einem Lastwagen, Anhänger oder anderem Aufnahmegefäß zugeführt werden.

Eine Erntegutaufnahmeeinrichtung am vorderen Ende des Mähdreschers erntet das Gut. Das geerntete Gut wird einem Schrägförderer zugeführt, um es an eine Drescheinrichtung abzugeben. Die Drescheinrichtung kann entweder eine konventionelle, quer angeordnete Dreschtrommel und ein Dreschkorb sein, oder ein Dreschrotor. Der Dreschrotor kann axial oder quer angeordnet sein. Die Vorwärtsgeschwindigkeit, mit der der Mähdrescher erntet, gibt die Menge des von der Drescheinrichtung aufgenommenen Materials vor.

Der Schrägförderer weist ein Gehäuse auf, das schwenkbar an der Vorderseite des Mähdreschers befestigt ist und an dem die Erntegutaufnahmeeinrichtung angebracht ist. Das Innere des Schrägförderers ist mit einem Förderer versehen, um das geerntete Gut nach oben und hinten in den Mähdrescher zu fördern. Der Förderer ist typischerweise ein Kettenförderer mit zwischen den Antriebsketten angeordneten, sich quer erstreckenden Mitnehmerflügeln. Ein hinten befestigtes Antriebsritzel treibt die Antriebsketten an. Die Antriebsketten umrunden eine vorn befestigte Trommel, die auf der Oberseite des geernteten Guts schwebend aufliegt. Wenn die vordere Trommel in ihre höchstmögliche Position nach oben geglitten ist, übt das geerntete Gut eine nach oben gerichtete Kraft auf die vordere Trommel aus.

Verschiedene Durchsatzsteuerungssysteme wurden vorgeschlagen, um die Effizienz des Mähdreschers zu verbessern. Einige dieser Systeme erfassen Kornverluste durch Verwendung von Kornverlustmonitoren. Andere Systeme erfassen den Durchsatz an Erntegut und versuchen einen relativ konstanten Durchsatz des Ernteguts aufrechtzuerhalten. Je früher die Messung des Durchsatzes des Ernteguts erfolgt, umso besser kann das Steuersystem arbeiten. Bei einem vorgeschlagenen Verfahren werden Schrägfördererkraftsensoren auf dem Schneidwerk verwendet, um den Durchsatz anzuzeigen, bevor das Gut geerntet wird, s. US 4 228 636 A.

In der US 3 073 099 A, woraus der Oberbegriff von Anspruch 1 hervorgeht, wird ein Mähdrescher mit einem Schrägförderer beschrieben, bei dem die durch das Erntegut vertikal bewegliche vordere Trommel des Schrägförderers einen hydraulischen Fühlzylinder bewegt, der die Vortriebsgeschwindigkeit des Mähdreschers auf hydraulische Weise steuert.

Die DE 43 11 054 A schlägt einen Mähdrescher vor, in dem Sensoren die Auslenkung der Ketten des Schrägförderers erfassen, die von der Menge des geförderten Guts abhängt. Die Sensoren verstellen ein Potentiometer, dessen Ausgangswert als Ausgangsgröße zur Steuerung der Vortriebseinrichtungen des Mähdreschers dient.

Die DE 199 03 471 C beschreibt einen Feldhäcksler, bei dem die Position einer Zuführwalze mit einem ersten Sensor gemessen wird. Wenn die Zuführwalze in ihre höchstmögliche Position gelangt und an einen Anschlag stößt, wird die wirkende Kraft durch einen zweiten Sensor gemessen. Die Signale des ersten und des zweiten Sensors werden zur Berechnung des aktuellen Gutdurchsatzes verwendet.

Die der Erfindung zugrunde liegende Aufgabe wird darin gesehen, ein verbessertes Durchsatzsteuerungssystem für einen Mähdrescher bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der erfindungsgemäße Schrägfördererkraftsensor findet in einem Mähdrescher Verwendung, welcher eine tragende Struktur aufweist und mittels einer Vortriebseinrichtung durch Mittel (insbesondere) Räder angetrieben wird, welche sich im Eingriff mit dem Erdboden befinden. Erntegut wird durch einen Schrägförderer in den Mähdrescher gefördert. Der im Schrägförderer angeordnete Schrägfördererkraftsensor überwacht die Kraft des sich durch den Schrägförderer bewegenden Ernteguts. Der Schrägfördererkraftsensor weist einen ersten Fühler auf, der die vertikale Position insbesondere der vorderen Trommel gegenüber dem Gehäuse des Schrägförderers erfasst. Da die Trommel im Schrägförderer in vertikaler Richtung beweglich angeordnet ist und mit dem Erntegut im Kontakt steht und durch es bewegt wird, ist die Position der Trommel ein Maß für den Erntegutdurchsatz. Die Position der Trommel kann durch ein Potentiometer erfasst werden. Es ist ein zweiter Fühler beispielsweise in Form einer Kraftmessdose vorgesehen, der die nach oben gerichtete Kraft misst, die auf die Trommel wirkt, wenn sie sich in ihrer höchstmöglichen Position befindet und an einem Anschlag anliegt. Die Signale der beiden Fühler werden miteinander verknüpft und als des Schrägfördererkraftsignal einer Steuerung zugeführt. Dieses Kraftsignal steht mit dem Durchsatz des Ernteguts in Beziehung. Die mit dem Schrägfördererkraftsignal des Schrägfördererkraftsensors versorgte Steuerung steuert die Vortriebsgeschwindigkeit des Mähdreschers.

Auf diese Weise erhält man einen einfachen und effektiven Schrägfördererkraftsensor zur Messung des Gutdurchsatzes eines Mähdreschers. Da das Ausgangssignal des Schrägfördererkraftsensors nur von den Einwirkungen des Ernteguts, nicht jedoch von eventuellen Einflüssen des Schrägförderers abhängt, beispielsweise der Reibung der Fördereinrichtung, ist die Messgenauigkeit verbessert. Die Durchsatzsteuerung arbeitet somit recht exakt.

Weiterhin kann eine Bedienersteuerung in der Bedienerkabine des Mähdreschers vorgesehen sein, die ein Verlustratensignal bereitstellt, das ebenfalls der elektronischen Steuerung zugeführt wird. Die elektronische Steuerung konvertiert das Verlustratensignal in ein gewünschtes Durchsatzsignal, das eine Information über den gewünschten Durchsatz enthält. Die elektronische Steuerung reguliert die Vorwärtsgeschwindigkeit (Erntegeschwindigkeit) des Mähdreschers, so dass das gewünschte Durchsatzsignal gleich dem wirklichen, aktuellen Durchsatzsignal ist, das anhand des Schrägfördererkraftsignals berechnet wird.

Eine weitere Verbesserung des Durchsatzsteuerungssystems ist die Verwendung eines Feuchtigkeitssensors im Schrägförderer, um den Feuchtigkeitsgehalt des geernteten Guts zu messen, wenn es den Schrägförderer durchläuft. Das Feuchtigkeitssignal wird der elektronischen Steuerung zugeführt und kann verwendet werden, das gewünschte Durchsatzsignal und/oder das aktuelle Durchsatzsignal zu verändern, um derart die Erntegeschwindigkeit des Mähdreschers zu verändern. Ein derartiger Feuchtigkeitssensor kann nicht nur mit einem Schrägfördererkraftsensor zur Messung des Gutdurchsatzes mit den zwei oben beschriebenen Fühlern verwendet werden, sondern mit einem beliebigen Schrägfördererkraftsensor, der eingerichtet ist, die Kraft zu erfassen, die das geerntete Gut auf den Schrägförderer ausübt, wenn es im Schrägförderer gefördert wird.

Zusätzlich oder alternativ kann das Feuchtigkeitssignal verwendet werden, die Geschwindigkeit des Mähdreschers schnell zu verändern, wenn das Feuchtigkeitssignal bestimmte, festgelegte Grenzen verlässt oder sich die Feuchtigkeit im Vergleich mit vorherigen Ablesungen drastisch ändert. Wenn der Mähdrescher beispielsweise in einen grünen, unkrauthaltigen Bereich auf dem Feld hineinfährt, würde der Feuchtigkeitssensor Erntegut mit hoher Feuchtigkeit signalisieren, so dass die Steuerung den Mähdrescher baldigst verlangsamt, um diese schwere Belastung besser aufnehmen zu können. In ähnlicher Weise würde die Steuerung den Mähdrescher automatisch beschleunigen, wenn er wieder in Erntegutbestände mit normaleren Bedingungen hineinfährt. Wie oben dargelegt, kann das Feuchtigkeitssignal verwendet werden, mindestens eines der Durchsatzsignale zu verändern und/oder mit einem festgelegten Feuchtigkeitsgrenzwert verglichen werden, um die normale Durchsatzsteuerung zu übersteuern.

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Mähdreschers, und
- Fig. 2: ein Schema eines erfindungsgemäßen Durchsatzsteuerungssystems.

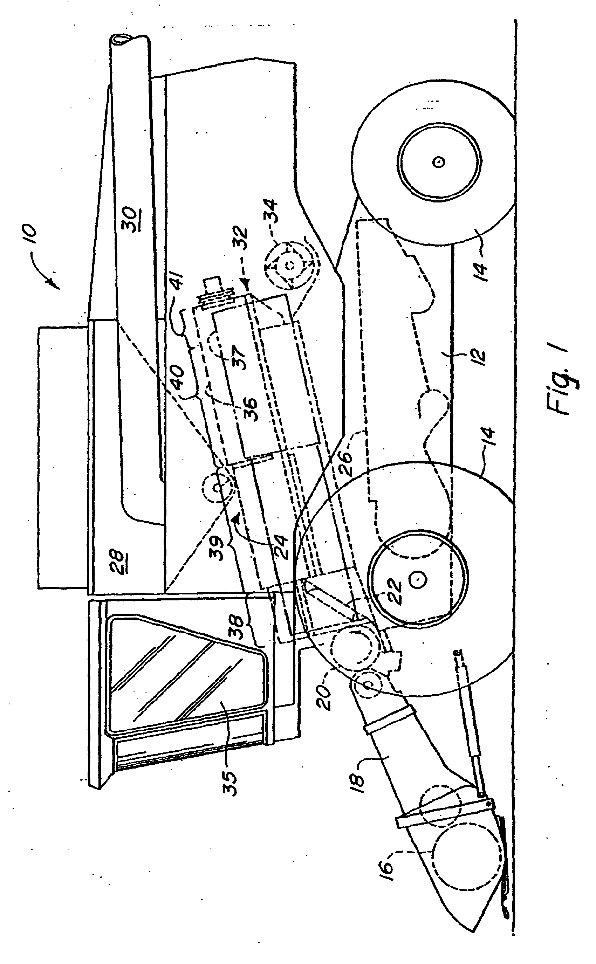

Die Figur 1 zeigt einen landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Gleisketten versehen sein. Ein Schneidwerk 16 wird zum Ernten von Erntegut und um es einem Schrägförderer 18 zuzuführen benutzt. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

Die vorderen Räder 14 des Mähdreschers 10 werden durch ein hydrostatisches Getriebe 50 angetrieben. Das hydrostatische Getriebe 50 wird auf konventionelle Weise durch einen nicht gezeigten Verbrennungsmotor angetrieben. Das hydrostatische Getriebe treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile steuern die Positionen der Taumelplatten. Die lenkbaren hinteren Räder 14 können auch durch Radmotore angetrieben werden, die direkt an den Rädern 14 befestigt sind. Die Geschwindigkeit der Radmotore kann durch das unten beschriebene Durchsatzsteuerungssystem gesteuert werden.

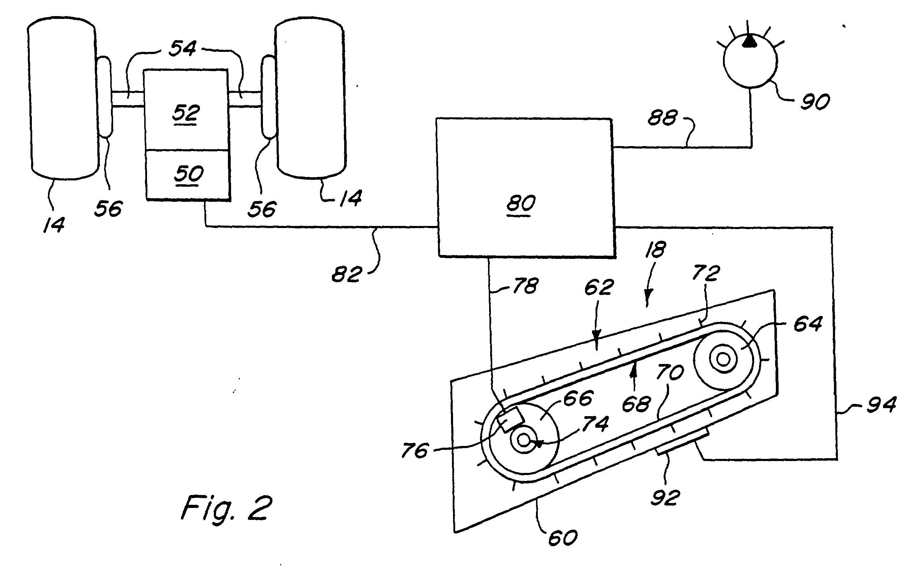

Wie in Figur 2 dargestellt, umfasst der Schrägförderer 18 ein Gehäuse 60 mit einer darin angeordneten Kettenfördereinrichtung 62. Die Kettenfördereinrichtung 62 umfasst ein hinteres Antriebsritzel 64 und eine vordere Trommel 66, um die ein Kettenförderer 68 angeordnet ist. Der Kettenförderer 68 umfasst wenigstens zwei längs angeordnete Ketten 70, an der sich quer erstreckende Mitnehmerflügel 72 angebracht sind. Die vordere Trommel 66 ist mit einer Achse 74 ausgestattet. Diese vordere Achse 74 kann in einem begrenzten Maß frei im Gehäuse 60 nach oben und unten gleiten. Die vordere Trommel 66 ist mit einem Schrägfördererkraftsensor 76 ausgestattet, der über eine Leitung 78 mit einer elektronischen Steuerung 80 in Kommunikation steht.

Wegen der gleitenden Anordnung der vorderen Trommel 66 umfasst der Schrägfördererkraftsensor 76 des Schrägförderers 18 zwei Fühler. Der erste Fühler umfasst ein Potentiometer, das die Position der vorderen Trommel 66 relativ zum Gehäuse 60 misst. Die Verschiebung der vorderen Trommel 66 nach oben ist ein Maß für die vom Erntegut auf die vordere Trommel 66 ausgeübte Kraft, da das geerntete Gut einen Teil des Gewichts der Kettenfördereinrichtung 62 überwinden muss, um die Trommel 66 anzuheben. Wenn die vordere Trommel 66 ihre höchstmögliche Position erreicht und an einem entsprechenden Anschlag anliegt, wird ein zweiter Fühler verwendet, um die Kraft im Schrägförderer 18 zu messen, da sich die Position der vorderen Trommel 66 dann nicht mehr relativ zum Gehäuse 62 ändert. Dieser zweite Fühler ist ein Kraftfühlelement, das über die Achse 74 die vom geernteten Gut auf die vordere Trommel 66 ausgeübte, nach oben gerichtete Kraft misst. Das vom Schrägfördererkraftsensor 76 des Schrägförderers 18 erzeugte Signal ist direkt mit dem Durchsatz des Ernteguts verknüpft, das den Schrägförderer 18 durchläuft und repräsentiert deshalb den wirklichen Durchsatz des Ernteguts, das in den Mähdrescher 10 gelangt.

Obwohl die vorliegende Erfindung anhand einer Verwendung an einem Schrägförderer 18 mit einer Kettenfördereinrichtung 62 beschrieben und zeichnerisch dargestellt wird, für den sie gut geeignet ist, kann sie auch an Schrägförderern verwendet werden, die mehrere quer angeordnete Fördertrommeln oder längs angeordnete Schneckenförderer aufweisen. Das Schlüsselmerkmal der vorliegenden Erfindung ist, ein Schrägfördererkraftsignal zu verwenden, das vom geernteten, den Schrägförderer durchlaufenden Gut erzeugt wird, und es mit dem Durchsatz in Verbindung zu bringen. Bei einem Schrägförderer mit quer angeordneten Fördertrommeln könnte die nach oben gerichtete, auf die Wellen der Fördertrommeln wirkende Kraft das Schrägfördererkraftsignal bereitstellen. Bei einem Schrägförderer mit längs angeordneten Schneckenförderern könnte die vom geernteten Gut auf die Schneckenförderertröge ausgeübte Kraft als Maß für das Schrägfördererkraftsignal dienen.

Eine elektronische Steuerung 80 steuert die Erntegeschwindigkeit des Mähdreschers 10. Das bedeutet, dass die elektronische Steuerung 80 die Vorwärtsgeschwindigkeit (Erntegeschwindigkeit) des Mähdreschers 10 durch ein Einstellen der Position der Taumelplatten des hydrostatischen Getriebes 50 steuert, indem der Betrieb der elektromagnetisch betätigten Steuerventile über eine Leitung 82 gesteuert wird. Die Steuerung 80 empfängt durch die Leitung 78 ein Schrägfördererkraftsignal vom Schrägfördererkraftsensor 76. Der Erntegutdurchsatz steht mit Ernteverlustraten in Beziehung. Die Steuerung 80 empfängt auch über eine Leitung 88 von einem Schalter 90 ein Sollverlustratensignal, das eine Information über eine gewünschte Verlustrate enthält. Der Schalter 90 ist in der Bedienerkabine 35 angeordnet.

Wenn der Bediener das Durchsatzsteuerungssystem betreibt, wählt er am Schalter 90 eine gewünschte Verlustrate aus. Die Steuerung 80 empfängt dieses Sollverlustratensignal und setzt es in ein gewünschtes Durchsatzsignal um. Die Steuerung 80 empfängt auch den aktuellen Durchsatz vom Schrägfördererkraftsensor 76. Die Steuerung 80 regelt die Vorwärtsgeschwindigkeit des Mähdreschers 10, so dass das gewünschte Kraftsignal gleich dem wirklichen Kraftsignal des Schrägfördererkraftsensors 76 ist.

In einer weiteren Verfeinerung des Systems ist der Schrägförderer 18 mit einem Feuchtigkeitssensor 92 ausgestattet, der über eine Leitung 94 mit der Steuerung 80 kommuniziert. Der Feuchtigkeitssensor 92 fühlt die Feuchtigkeit im Erntegut, das den Schrägförderer 18 durchläuft. Das Feuchtigkeitssignal kann dazu verwendet werden, das Signal über den wirklichen Durchsatz oder das Signal über den gewünschten Durchsatz zu verändern, um den Mähdrescher 10 zu verlangsamen, wenn er Erntegut mit hoher Feuchtigkeit aufnimmt.

Gemeinsam mit der oben beschriebenen Signaländerung oder alternativ dazu kann das Feuchtigkeitssignal benutzt werden, die Erntegeschwindigkeit des Mähdreschers 10 direkt einzustellen. Wenn das Erntegutfeuchtigkeitsniveau höher als ein festgelegter Betrag ist, wird der Mähdrescher 10 um einen bestimmten Betrag verlangsamt. Wenn der Mähdrescher 10 beispielsweise ein unkrauthaltiges, grünes Erntegut aufnimmt, wird der Feuchtigkeitssensor 92 eine gesteigerte Feuchtigkeit messen. Das Feuchtigkeitssignal wird über die Leitung 94 der Steuerung 80 zugeführt werden. Die dieses Signal empfangende Steuerung 80 wird zuerst feststellen, ob die Erntegutfeuchtigkeit oberhalb eines festgelegten Betrags liegt, und wenn das der Fall ist, wird die Steuerung 80 den Mähdrescher 10 sofort verlangsamen.

## Patentansprüche

1. Mähdrescher (10), mit einem Schrägförderer (18), der eingerichtet ist, Erntegut in den Mähdrescher (10) zu fördern, mit im Eingriff mit dem Erdboden befindlichen Mitteln, die eingerichtet sind, den Mähdrescher (10) mit einer Erntegeschwindigkeit über den Erdboden zu bewegen und mit einer Steuerung (80), die eingerichtet ist, die Erntegeschwindigkeit in Abhängigkeit vom Signal eines Schrägfördererkraftsensors (76) einzustellen, der eingerichtet ist, eine vom Erntegut auf den Schrägförderer (18) ausgeübte Kraft zu erfassen und der Steuerung (80) ein aktuelles Schrägfördererkraftsignal zuzuführen, **dadurch gekennzeichnet, dass** der Schrägfördererkraftsensor (76) einen ersten Fühler umfasst, der eingerichtet ist, die Position einer Trommel (66) zu erfassen, die an der Oberseite des Ernteguts aufliegt und durch das Erntegut vertikal bewegbar ist, dass der Bewegungsbereich der Trommel (66) durch einen Anschlag begrenzt ist, und dass ein zweiter Fühler des Schrägfördererkraftsensors (76) eingerichtet ist, die von der Trommel (66) auf den Anschlag ausgeübte Kraft zu erfassen, wenn die Trommel (66) bei relativ hohen Gutdurchsätzen am Anschlag anliegt.

2. Mähdrescher (10) nach Anspruch 1, **dadurch gekennzeichnet, dass** die Steuerung (80) mit einem durch einen Bediener eingebbaren Sollverlustratensignal beaufschlagbar ist.

3. Mähdrescher (10) nach Anspruch 2, **dadurch gekennzeichnet, dass** die Steuerung (80) das Sollverlustratensignal in ein gewünschtes Schrägfördererkraftsignal umwandelt, das gemeinsam mit dem wirklichen Schrägfördererkraftsignal die Erntegeschwindigkeit der im Eingriff mit dem Erdboden befindlichen Mittel steuert.

4. Mähdrescher (10) nach einem der Ansprüche 1 bis 3, **dadurch gekennzeichnet, dass** der Schrägförderer (18) mit einem Feuchtigkeitssensor (92) zur Messung der Feuchtigkeit des den Schrägförderer (18) durchlaufenden Ernteguts ausgestattet ist, welcher der Steuerung (80) ein Feuchtigkeitssignal zuführt.

5. Mähdrescher (10) nach Anspruch 4, **dadurch gekennzeichnet, dass** die Steuerung (80) das Feuchtigkeitssignal verwendet, um das gewünschte Schrägfördererkraftsignal und/oder das wirklichen Schrägfördererkraftsignal zu verändern.

6. Mähdrescher (10) nach Anspruch 4 oder 5, **dadurch gekennzeichnet, dass** die Steuerung (80) das Feuchtigkeitssignal verwendet, die Erntegeschwindigkeit direkt zu verändern.

## Claims

1. Combine harvester (10) having an inclined conveyor (18) which is installed to convey harvested crop into the combine harvester (10), having means which are situated in engagement with the ground and are installed to move the combine harvester (10) over the ground at a harvesting speed, and having a control unit (80) which is installed to adjust the harvesting speed as a function of the signal of an inclined conveyor force sensor (76) which is installed to detect a force exerted by the harvested crop on the inclined conveyor (18), and to supply a current inclined conveyor force signal to the control unit (80), **characterised in that** the inclined conveyor force sensor (76) includes a first probe which is installed to detect the position of a drum (66) which is supported on the upper side of the harvested crop and can be moved vertically by the harvested crop, **in that** the movement range of the drum (66) is delimited by a limit stop, and **in that** a second probe of the inclined conveyor force sensor (76) is provided to detect the force exerted by the drum (66) on the limit stop when the drum (66) abuts on the limit stop in the case of relatively high crop throughputs.

2. Combine harvester (10) according to claim 1, **characterised in that** the control unit (80) can be supplied with a reference wastage rate signal which can be input by an operator.

3. Combine harvester (10) according to claim 2, **characterised in that** the control unit (80) converts the reference wastage rate signal into a desired inclined conveyor force signal which, together with the actual inclined conveyor force signal, controls the harvesting speed of the means which are situated in engagement with the ground.

4. Combine harvester (10) according to one of the claims 1 to 3, **characterised in that** the inclined conveyor (18) is equipped with a moisture sensor (92) to measure the moisture of the harvested crop which is passing through the inclined conveyor (18), said sensor supplying a moisture signal to the control unit (80).

5. Combine harvester (10) according to claim 4, **characterised in that** the control unit (80) uses the moisture signal in order to change the desired inclined conveyor force signal and/or the actual inclined conveyor force signal.

6. Combine harvester (10) according to claim 4 or 5, **characterised in that** the control unit (80) uses the moisture signal to change the harvesting speed directly.

## Revendications

1. Moissonneuse-batteuse (10), comportant un convoyeur élévateur (18), qui est conçu pour transférer la masse végétale récoltée à l'intérieur de la moissonneuse-batteuse (10), des moyens en prise avec le sol, qui sont conçus pour déplacer la moissonneuse-batteuse sur le sol avec une vitesse de récolte, et un dispositif de commande (80) qui est conçu pour régler la vitesse de récolte en fonction du signal d'un capteur de force (76) du convoyeur élévateur, lequel est conçu pour enregistrer la force exercée par la masse végétale récoltée sur le convoyeur élévateur (18) et pour transmettre un signal de force actuel vers le dispositif de commande (80), **caractérisée en ce que** le capteur de force (76) du convoyeur élévateur comporte un premier palpeur qui est conçu pour enregistrer la position d'un tambour (66) qui repose sur le côté supérieur de la masse végétale et qui se déplace verticalement à travers la masse végétale, **en ce que** la zone de mouvement du tambour (66) est limitée par une butée, et **en ce qu'**un deuxième palpeur du capteur de force (76) du convoyeur élévateur est conçu pour enregistrer la force exercée par le tambour (66) sur la butée lorsque le tambour (66) est en appui contre celle-ci en présence de débits relativement élevés de la masse végétale.

2. Moissonneuse-batteuse (10) selon la revendication 1, **caractérisée en ce que** le dispositif de commande (80) peut être sollicité par un signal de taux de perte de consigne, entré par la personne de service.

3. Moissonneuse-batteuse (10) selon la revendication 2, **caractérisée en ce que** le dispositif de commande (80) transforme le signal de taux de perte de consigne en un signal de force désiré, lequel, conjointement avec le signal de force réel, commande la vitesse de récolte des moyens en prise avec le sol.

4. Moissonneuse-batteuse (10) selon l'une quelconque des revendications 1 à 3, **caractérisée en ce que** le convoyeur élévateur (18) est équipé d'un capteur d'humidité (92), qui est destiné à mesurer l'humidité de la masse végétale traversant le convoyeur élévateur (18) et qui transmet un signal d'humidité au dispositif de commande (80).

5. Moissonneuse-batteuse (10) selon la revendication 4, **caractérisée en ce que** le dispositif de commande (80) utilise le signal d'humidité pour modifier le signal de force désiré et/ou le signal de force réel.

6. Moissonneuse-batteuse (10) selon la revendication 4 ou 5, **caractérisée en ce que** le dispositif de commande (80) utilise le signal d'humidité pour modifier directement la vitesse de récolte.
